# EUROPÄISCHE PATENTSCHRIFT

(11) **EP 2 792 918 B1**
(45) Veröffentlichungstag und Bekanntmachung des Hinweises auf die Patenterteilung: **26.10.2016**
(21) Anmeldenummer: 14001243.6
(22) Anmeldetag: 03.04.2014
(51) Int. Cl.: F16K 31/126, F16B 39/10, F16K 27/02

(54) **Stellgerät für eine verfahrenstechnische Anlage**
Positioning device for a processing system
Appareil de réglage pour une installation technologique

(30) Priorität: 18.04.2013 DE 102013006777
(43) Veröffentlichungstag der Anmeldung: 22.10.2014
(73) Patentinhaber: Samson Aktiengesellschaft, 60314 Frankfurt (DE)
(72) Erfinder: Jantz, Johannes, 61267 Neu-Anspach (DE); Kunz, Bernd, 34549 Edertal/Hemfurth (DE)
(74) Vertreter: Schmid, Nils T.F.

(56) Entgegenhaltungen:
- DE-A1-102005 060 120
- FR-A1- 2 712 645
- GB-A- 540 325
- GB-A- 2 138 912
- US-A- 2 456 493
- US-A- 3 204 925
- US-A- 4 452 428
- US-A- 4 943 033

## Beschreibung

Die Erfindung betrifft ein Stellgerät oder eine Ventilanordnung für eine verfahrenstechnische Anlage, wie eine petrochemische Anlage, eine Brauerei, eine Nuklearanlage oder dergleichen.

Das Stellgerät umfasst ein Stellventil, mit einem Ventilgehäuse, einem Ventilsitz und einem Ventilglied, und ein Oberteil, wie ein Joch, eine Laterne oder eine Antriebsstangen- oder Antriebswellenführung. Das Oberteil ist dazu ausgelegt, in eine Durchführungsöffnung im Ventilgehäuse eingeschraubt zu werden, um als tragende Struktur zur Anbindung eines Stellantriebsgehäuses zu dienen. Das Stellgerät muss nicht unbedingt mit einem an dem Oberteil befestigten Stellantrieb, wie einem pneumatischen Stellantrieb, ausgestattet sein. Der Stellantrieb kann auch nachträglich angebaut werden. Üblicherweise ist das Stellgerät allerdings eine Einheit aus Stellventil, Oberteil und Stellantrieb.

Ein Beispiel für ein Stellgerät ist aus US 6,905,108 B2 bekannt, bei dem das Oberteil sowohl eine Jochfunktion als auch eine Antriebsstangenführungsfunktion in einer einstückig hergestellten Tragstruktur realisiert. In einem Stellstangen-Durchführkanal des Oberteils ist eine Dichtungsanordnung, wie ein Dichtungspaket, untergebracht, um den Stellventilinnenraum im Bereich des Durchtrittkanals für die Stellantriebsstange oder der Stellantriebswelle des Stellantriebs abzudichten.

US 2,456,493 A betrifft ein zeitgesteuertes Ventil. Von DE 10 2005 060 120 A1 ist ein Heizkörper-Einbauventil mit einem Gehäuse und einem Ventileinsatz bekannt.

Ein bewährtes Stellgerät ist aus DE 10 2010 025 635 B4 bekannt, bei dem das Oberteil das Dichtungspaket sowie Druckfedern zur axialen Vorspannung der Dichtungspackung aufnimmt. Das Oberteil ist an der Durchführöffnung des Ventilgehäuses eingeschraubt. Das Oberteil dient dazu, die Stellstange des Stellantriebs zum Betätigen des Ventilglieds gegenüber dem Ventilsitz zu führen.

Beim Einschrauben des Oberteils samt Joch zeigten sich Montageschwierigkeiten vor allem bei ungeübtem Bedienpersonal. Wegen der fehlenden Rotationssymmetrie des Oberteils ist es bei der an sich bewährten Verschraubung des Oberteils schwierig, eine bestimmte Relativposition des Oberteils gegenüber dem Ventilgehäuse bzw. dem Stellantriebsgehäuse einzustellen, ohne entweder das Oberteil gegenüber dem Ventilgehäuse zu überdrehen oder ihm eine zu geringe Schraubkraft zu verleihen. Aufgrund der recht hohen Hebelarme der Jochstruktur gegenüber der Schraubachse kann es auch dazu kommen, dass ein unabsichtliches Lösen des Oberteils von dem Ventilgehäuse verursacht wird, vor allem dann, wenn bei Erreichen der gewünschten Drehposition des Oberteils noch zu geringe Schraubkräfte zwischen dem Oberteil und dem Ventilgehäuse wirken.

Es ist Aufgabe der Erfindung, die Nachteile des Stands der Technik zu überwinden, insbesondere ein Stellgerät für eine verfahrenstechnische Anlage dahingehend zu verbessern, dass sowohl die Gefahr eines unabsichtlichen Lösens des Oberteils von dem Ventilgehäuse minimiert wird als auch die Positionierung des Oberteils relativ zum Ventilgehäuse präzise und beliebig unter Beibehaltung einer festen und lösbaren Kopplung des Oberteils an das Ventilgehäuse sichergestellt ist.

Diese Aufgabe wird durch die Merkmale von Anspruch 1 und Anspruch 2 gelöst.

Danach ist ein Stellgerät oder eine Ventilanordnung, insbesondere eine Stellventilanordnung, für eine verfahrenstechnische Anlage, wie eine petrochemische Anlage, eine Brauerei, eine Nuklearanlage oder dergleichen, vorgesehen. Das Stellgerät umfasst ein Stellventil mit einem Ventilgehäuse, das an Rohrleitungen der Anlage anschließbar ist und im Inneren einen Ventilsitz strukturell festlegt, mit dem ein stellbares Ventilglied des Stellventils verschließend, teilweise sogar vollständig öffnend, zusammenarbeitet. Zur Betätigung des Ventilglieds mittels eines Stellantriebs, der Teil des Stellgeräts sein kann, umfasst das Ventilgehäuse stellantriebsseitig eine Durchführöffnung insbesondere zum Durchführen einer durch den Stellantrieb betätigten Stellstange, die an deren ventilsitzseitigem Ende das Ventilglied trägt. Des Weiteren hat das Stellgerät ein Oberteil, das auf dem Gebiet der verfahrenstechnischen Feldgeräte als Joch, Laterne oder Antriebsstangen- oder Antriebswellenführung bezeichnet werden kann. Das Oberteil wird als separates Montageteil des Stellgeräts gefertigt, um die Möglichkeit bereitzustellen, eine für eine einfache Zugänglichkeit größere Durchführöffnung in dem Ventilgehäuse einzuarbeiten. Das Oberteil kann einteilig oder mehrteilig sein, um die Joch-, Laternen- oder Führungsfunktion zu realisieren. Das Oberteil ist dazu ausgelegt, in die Durchführöffnung eingeschraubt zu werden, wobei das Oberteil zumindest teilweise als Kopplungsstruktur zum tragenden Anbinden des Stellantriebs an das Ventilgehäuse dienen kann. Erfindungsgemäß ist an sich gegenüberliegenden Schraubanschlagsflächen des Oberteils und des Ventilgehäuses ein Deformationspuffer angeordnet oder ausgebildet, der beim Verschrauben, insbesondere beim Einschrauben, des Oberteils auf vorbestimmte Weise deformierbar ist. Der Deformationspuffer dient dazu, ein schlagartiges Erzeugen von axialen Schraubpresskräften zwischen den Schraubanschlagsflächen zu vermeiden, indem der Aufbau axialer Verschraubungspresskräfte bei fortschreitender Einschraubbewegung drehwegverzögert wird. Auf diese Weise ist es auch für ein ungeübtes Montagepersonal möglich, eine ausreichende Montagefeststellkraft zwischen dem Oberteil und dem Ventilgehäuse zu erzeugen, wobei eine gewünschte Rotationsposition des Oberteils gegenüber dem Ventilgehäuse positionsgenau eingenommen werden kann. Ein Vorteil des Deformationspuffers besteht insbesondere darin, im Prozessmedium auftretende Druckschläge derart zu dämpfen, dass das Oberteil sich nicht lockert. Dieser Vorteil entsteht aus der Puffernachgiebigkeit mittels elastischer Verformung des Deformationspuffers.

Vorzugweise ist die Schraubanschlagsfläche des Ventilgehäuses durch eine in Bezug auf eine axiale Erstreckungsrichtung einer Stellstange oder Stellwelle des Stellantriebs radiale Stirnfläche eines vorstehenden Gehäusehalses ausgebildet, während die Schraubanschlagsfläche des Oberteils durch einen radial außen liegenden oder radial innen liegenden Ringabsatz gebildet sein kann, je nach dem, ob das Oberteil in die Durchführöffnung des Ventilgehäuses eingeschraubt ist oder der Ringabsatz den Gehäusehals des Ventilgehäuses radial umgibt.

Vorzugsweise ist der Deformationspuffer als separate Basisringstruktur ausgebildet, die als Grundgestalt eine Scheibenform aufweisen kann, welche selbst bei dieser Grundgestalt ein nicht vernachlässigbares Deformationsvolumen bereitstellen kann, um die gewünschte Verdrehverzögerung beim Aufbau der Verschraubpresskraft zu erreichen. Der Deformationspuffer kann in Form einer Ringscheibe eine vorbestimmte Profilierung aufweisen, wie eine Wellenstruktur, um das Soll-Deformations-Volumen zu vergrößern. Der Deformationspuffer kann auch oberteilseitig oder ventilgehäuseseitig aus einem Stück mit dem Oberteil bzw. mit dem Ventilgehäuse ausgebildet sein.

Bei einer bevorzugten Ausführung der Erfindung ist der Deformationspuffer derart mit dem Oberteil oder dem Ventilgehäuse gekoppelt, dass beim Verschrauben des Oberteils der Deformationspuffer gegenüber dem Oberteil oder dem Ventilgehäuse ortsfest gehalten wird. Damit kann der Deformationspuffer mit einer Verdrehsicherung ausgestattet sein, die ein Mitverdrehen beim Verschrauben des Oberteils entweder gegenüber dem Oberteil oder dem Ventilgehäuse verhindert. Bei einer bevorzugten Ausführung der Erfindung ist der Deformationspuffer ist als separates Montageteil zwischen dem Oberteil und dem Ventilgehäuse eingelegt. Der Deformationspuffer hat vorzugsweise eine dem Ventilgehäuse zugewandte insbesondere ringförmige Klemmseite und eine dem Oberteil zugewandte insbesondere ringförmige Klemmseite.

Vorzugsweise ist der der Deformationspuffer als eine scheibenförmige insbesondere geschlossene Basisringstruktur ausgebildet, dessen beide Klemmseiten vorzugsweise abschnittsweise eben geformt sind.

Bei einer Ausführung der Erfindung kann insbesondere zur Bildung der Verdrehsicherung der Deformationspuffer wenigstens eine vorstehende Eingriffsnase aufweisen. Vorzugsweise ragt die Eingriffsnase von einer oder beiden Klemmseiten der Basisringstruktur vor. Zur Bildung der Verdrehsicherung kann die wenigsten eine Eingriffsnase in einer dazu formkomplementären Eingriffsvertiefung an der Schraubanschlagsfläche des Oberteils oder des Ventilgehäuses vorzugsweise lose eingreifen. Die wenigstens eine Eingriffsnase kann als Vollkörper oder Durchzug ausgebildet sein. Die Eingriffsvertiefung kann als Sackloch ausgeführt sein. Bei einer Ausbildung der Erfindung kann die wenigstens eine Eingriffsnase als Vollkörper durch Aufschweißen befestigt sein.

Vorzugsweise sind mehrere Eingriffsnasen insbesondere mit einem konstanten Umfangsabschnitt von 120°, 90° oder 60° zwischen benachbarten Eingriffsnasen an der Basisringstruktur ausgebildet. Vorzugsweise sind sämtliche Eingriffsnasen an einer der beiden Klemmseiten der Basisstruktur ausgebildet. An der Schraubanschlagsfläche des Oberteils oder des Ventilgehäuses können in Bezug auf die Anzahl der Eingriffsnasen gleich viele Eingriffsvertiefungen oder eine größere Anzahl von Eingriffsvertiefungen aufweisen. Dabei sind die Eingriffsvertiefungen derart angeordnet, dass in einer bestimmten Rotationsposition die Basisringstruktur ortsfest an dem Oberteil oder dem Ventilgehäuse gehalten wird, während sämtliche Eingriffsnasen in Eingriffsvertiefungen aufgenommen sind.

Bei einer Weiterbildung der Erfindung hat der Deformationspuffer auf einer dem Oberteil und/oder dem Ventilgehäuse insbesondere den jeweiligen Schraubanschlagsflächen zugewandten Klemmseite wenigstens eine Solldeformationszone. Die Solldeformationszone ist ein gegenüber der insbesondere ebenen Klemmseite örtlich begrenzter Bereich und umfasst ein vorbestimmtes Deformationsvolumen. Die wenigstens eine Soll-Deformationszone ist vorzugsweise nur auf einer der beiden Klemmseiten ausgebildet, während die andere Klemmseite solldeformationszonenfrei ausgeführt ist. Die Solldeformationszone kommt beim Verschrauben des Oberteils in einen Kontakt mit der jeweiligen Schraubanschlagsfläche und wird beim anschließenden Weiterschrauben allmählich deformiert.

Bei einer bevorzugten Ausführung der Erfindung kann die Geometrie der Deformationszone vorbestimmbar den Aufbau von axialen Klemmkräften zwischen dem Oberteil und dem Ventilgehäuse einstellen. Je höher die Anzahl der Deformationszonen, desto höhere Deformationskräfte sind erzeugbar; d.h. desto höhere axiale Verschraubklemmkräfte können je nach Verdrehweg des Oberteils realisiert werden.

Bei einer bevorzugten Ausführung der Erfindung ist die wenigstens eine Solldeformationszone durch wenigstens eine örtlich begrenzte erhabene Wölbung realisiert, die von einer der ebenen Klemmseiten der Basisstruktur vorsteht. Vorzugsweise ist die Vorwölbung durch eine Einprägung der scheibenförmigen Basisringstruktur gebildet, so dass die wenigstens eine Soll-Deformationszone dieselbe Querschnittsstärke wie der restliche Teil der Basisringstruktur aufweist. Damit soll erreicht werden, dass beim Deformieren der Solldeformationszone eine der Vorwölbung entsprechende Konkavität bereitsteht, wobei in den konkaven Freiraum das Material der wenigstens einen Soll-Deformationszone ausweichen kann. Auf diese Weise ist ein homogener flächiger Presskraftübertrag zwischen dem Oberteil, dem Deformationspuffer und dem Ventilgehäuse erreichbar.

Bei einer bevorzugten Ausführung der Erfindung sind mehrere Solldeformationszonen vorzugsweise mit einem konstante Umfangsabstand von 120°, 90° oder 60° an der Basisstruktur ausgebildet. Vorzugsweise sind vier oder mehr Deformationszonen, insbesondere sechs Deformationszonen angeordnet.

Bei einer Weiterbildung der Erfindung stehen sowohl die wenigstens eine Eingriffsnase der Verdrehsicherung als auch die wenigstens eine Solldeformationszone von der gleichen ebenen Klemmseite der Basisringstruktur vor. Vorzugsweise stehen die wenigstens eine Eingriffsnase und die wenigstens eine Solldeformationszone entgegengesetzt von einer ebenen Klemmseite der Basisringstruktur vor. Dabei ist die Eingriffsnase vorzugsweise dem Ventilgehäuse zugewandt. Die gegenüber liegende, insbesondere dem Oberteil zugewandte ebene Klemmseite ist mit dem der Wölbung der wenigstens einen Solldeformationszone gegenüberliegenden konkaven Einprägung versehen. In einer vorteilhaften Ausgestaltung stehen die wenigstens eine Eingriffsnase der Verdrehsicherung und die wenigstens eine Solldeformationszone von der gleichen Seite der Basisstruktur vor und sind vorzugsweise dem Ventilgehäuse zugewandt.

Bei einer alternativen Ausführung der Erfindung hat der Deformationspuffer eine Sicherungslasche, die insbesondere an dem Außenumfang der Basisringstruktur angeordnet ist. Die Sicherungslasche wird nach Abschluss des Verschraubvorgangs hin zum Oberteil oder zum Ventilgehäuse umgebogen. Vorzugsweise soll die Biegerichtung der Sicherungslasche entgegengesetzt der Vorstehrichtung der wenigstens einen Eingriffsnase und/oder der wenigstens einen Solldeformationszone gerichtet sein.

Bevorzugte Ausgestaltungen sind in den Unteransprüchen angegeben.

Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Figur 1: eine Querschnittsansicht eines erfindungsgemäßen Stellgeräts mit einem Stellventil, einem Stellantrieb und einem das Stellventil mit dem Stellantrieb starr koppelnden Oberteil;
- Figur 2: eine Querschnittsdetailansicht eines Übergangsbereichs des Feldgeräts nach Figur 1 am Übergang zwischen dem Ventilgehäuse und dem eingeschraubten Oberteil;
- Figur 3: ein erfindungsgemäßer Deformationspuffer, der zwischen dem Ventilgehäuse und dem Oberteil zu verklemmen ist; und
- Figur 4: eine Querschnittsansicht des Deformationspuffers entlang der Schnittlinie IV-IV gemäß Figur 3.

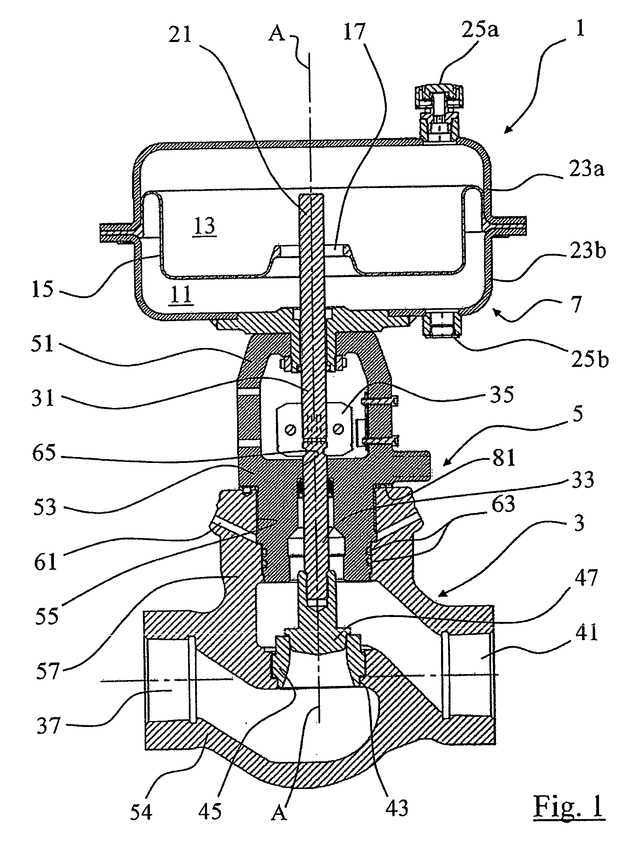

In Figur 1 ist im Allgemeinen ein erfindungsgemäßes Stellgerät mit der Bezugsziffer 1 versehen. Das Stellgerät 1 umfasst drei Hauptbestandteile, nämlich das Stellventil 3, ein mit dem Stellventil 3 verschraubtes Oberteil 5 und einen mit dem Stellventil 3 starr gekoppelten Stellantrieb, der optional zur Realisierung des Stellgeräts angebaut ist oder nachträglich angebaut werden kann.

Der Stellantrieb 7 ist als pneumatischer Antrieb realisiert und mit zwei pneumatischen Arbeitskammem 11, 13 ausgestattet, die durch eine Membran 15 voneinander luftdicht getrennt sind. An der Membran 15 ist ein Kopplungsring 17 befestigt, der eine starre Ankopplung der Membran 15 an eine Antriebsstange 21 des Stellantriebs 7 zulässt. Die Membran 15 ist zwischen zwei Antriebsgehäusehälften 23a, 23b einklemmt, die die Arbeitskammern 11, 13 begrenzen, und in denen pneumatische Anschlüsse 25a, 25b vorgesehen sind.

Eine untere Antriebsgehäusehälfte 23b umfasst eine Abtriebsöffnung zum Durchführen der zweigeteilten Antriebsstange 21, welche einen stellantriebsseitigen Antriebsstangenteil 31 und ein ventilseitigen Abtriebsstangenteil 33 umfasst. Beide Stangenteile 31, 33 sind durch einen Stangenkoppler 35 kraftschlüssig und/oder formschlüssig aneinander gekoppelt, wobei der Stangenkoppler 35 durch zwei miteinander verschraubte Schellen ausgebildet sein kann. Die Schellen greifen in eine stangenkopplersnahe Vertiefung des Abtriebsstangenteils 33 ein.

Das Stellventil 3 hat ein Ventilgehäuse 54, das einen Zulauf 37 sowie einen Ablauf 41 festlegt, wobei der Zulauf 37 von dem Ablauf 41 über einen Ventilsitzdurchgang 43 getrennt ist. Der Ventilsitzdurchgang 43 nimmt einen Ventilsitzring 45 auf, der mit einem Ventilglied 47 verschließend und öffnend zusammenwirkt, so dass ein Durchfluss durch das Stellventil 3 entweder zugelassen, teilweise zugelassen oder gesperrt werden kann. Das Ventilglied 47 ist an einem Ende des Abtriebsstangenteils 33 befestigt.

Das Ventilgehäuse 54 ist mit dem Gehäuse des Stellantriebs 7 starr gekoppelt, und zwar mit Hilfe des Oberteils 5, das als Joch, Laterne und/oder Antriebsstangen- oder Antriebswellenführung ausgebildet sein kann. In der in Figur 1 dargestellten Ausführung ist das Oberteil 5 als einstückiges Bauteil realisiert, das sowohl eine seitlich zugängliche Jochstruktur 51 als auch einen Stangen- oder Wellenführungseinsatz 53 bildet. Das Oberteil 5 ist einer oberen Durchführöffnung 55, die mit einem Innengewinde versehen ist, des Ventilgehäuses 54 eingeschraubt, wobei dafür der Stangen- oder Wellenführungseinsatz 53 des Oberteils 5 ein entsprechendes Außengewinde hat.

Die Durchführöffnung 55 wird an dem Ventilgehäuse 54 durch einen Hals 57 realisiert, an deren Innenfläche sowohl das Innengewinde als auch Dichtflächen ausgebildet sind, wobei sich radial durch den Vertikalhals 57 hindurch ein Leckagekanal 61 erstreckt. Der Leckagekanal 61 mündet an einer Innenfläche des Vertikalhalses 57 unmittelbar axial unterhalb des Innengewindes, wobei weiter darunter die Dichtflächen ausgebildet sind, die mit O-Ringen 63 des Stangen- oder Wellenführungseinsatzes 53 zusammenwirken.

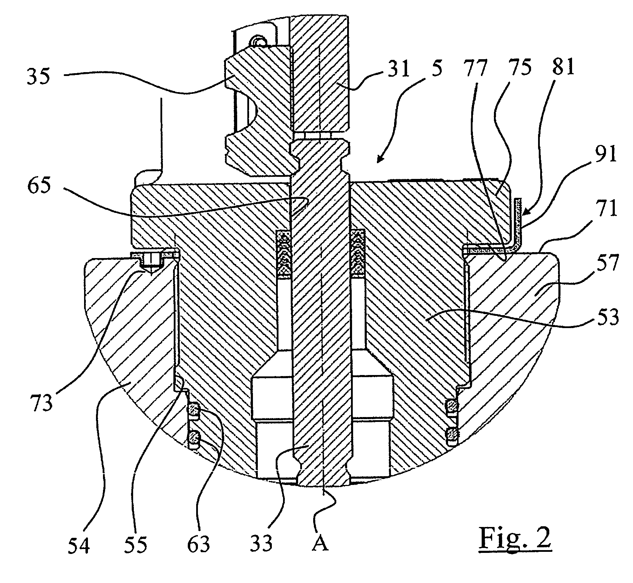

Der Stangen- oder Wellenführungseinsatz 53 hat einen gedichteten Durchgang 65 zur Durchführung des Abtriebsstangenteils 33. Der Durchgang 65 ist im Verlauf hin zum Ventilglied 47 sacklochförmig erweitert, wobei in der sacklochförmigen Erweiterung ein gegebenenfalls axial vorgespanntes Dichtungspaket angeordnet ist, das durch mehrere in Reihe geschaltete Dichtungselemente realisiert sein kann (siehe Figur 2).

Der Hals 57 hat an seiner oberen, dem Stellantrieb 7 zugewandten Montageseite eine ringförmige, ebene, radiale Schraubenanschlagsfläche 71, die bezüglich der Axialrichtung A, die der translatorischen Stellrichtung der Stellstange 21 entspricht, senkrecht verläuft. Die Schraubenanschlagsfläche 71 hat in einem konstanten Umfangsabstand mehrere, vorzugsweise drei Aufnahmevertiefungen 73, die beispielsweise als Sacklochbohrung ausgebildet sein können. Es können auch mehr als drei solche Eingriffsvertiefungen 73 an der Schraubenanschlagsfläche 71 ausgebildet sein. Die Schraubenanschlagsfläche 71 arbeitet mit einer gegenüber liegenden Schraubenanschlagsgegenfläche 77 eines Montageradialabsatzes 75 des Oberteils 5 zusammen, der sich in Radialrichtung erstreckt und die radiale Schraubenanschlagsgegenfläche 77 festlegt. Zwischen der Schraubenanschlagsgegenfläche 77 und der Schraubenanschlagsfläche 71 ist eine einen Deformationspuffer bildende ring- und scheibenförmige Basisringstruktur 81 eingelegt. Bei Verschrauben des Oberteils wird die Basisringstruktur 81 zwischen dem Oberteil 5 und dem Ventilgehäuse 54 allmählich deformiert. Der Deformationspuffer 81 hat zwei Grundfunktionen, nämlich eine Verdrehsicherung sowie eine vorbestimmte Sollposition von Oberteil zu Ventilteil mittels einer tolerierten Solldeformation des Deformationspuffers zu erreichen.

Die Verdrehsicherung stellt sicher, dass der Deformationspuffer 81 beim Einschrauben des Oberteils 5 in das Ventilgehäuse 54 nicht in Drehrichtung mit gedreht wird. Die Solldeformation wird durch mehrere Solldeformationszonen realisiert, die durch einen Teil des Deformationspuffers 81 gebildet sind. Die Deformationszone wird durch eine örtlich begrenzte Prägung realisiert, wodurch sich auf einer Klemmseite des Deformationspuffers 81 eine konvexe Wölbung und auf der anderen Klemmseite eine konkave Einprägung ergibt. Die Solldeformationszonen werden während des Verschraubens des Oberteils 5, also beim Verspannen des Deformationspuffers 81 vorbestimmt allmählich deformiert. Mittels dieser Sollverformung wird sichergestellt, dass keine übermäßigen das Gewinde möglicherweise beschädigenden axialen Schraubkräfte aufgebracht werden und ein schlagartiger Aufbau axialer Klemmkräfte verhindert wird.

Der Innendurchmesser des Deformationspuffers 81 entspricht im Wesentlichen dem Innendurchmesser des Durchgangs 55. Der Außendurchmesser des Deformationspuffers 81 entspricht im Wesentlichen dem Außendurchmesser des Radialabsatzes 75. Im Umfangsverlauf ist die Ringbreite im Wesentlichen konstant. Auch die axiale Ringstärke ist im Umfangsverlauf gleichbleibend.

Zur Realisierung der Funktion der Verdrehsicherung umfasst der Deformationspuffer 81 auf seiner dem Ventilgehäuse 54 zugewandten Ringfläche (Klemmseite) 83 wenigstens zwei, vorzugsweise drei Eingriffsnasen 85, von denen alle in die zugeordneten Eingriffsvertiefungen 73 in der Schraubenanschlagsfläche 71 eingreifen, damit beim Verschrauben und Aufbringen von rotativen Mitnehmerkräften der Deformationspuffer 81 deren Umfangsposition nicht verändert.

Es sei klar, dass eine entsprechende Eingriffsnase 85 auch an der dem Stellantrieb 7 zugewandten Ringfläche des Deformationspuffers 81 ausgebildet sein kann, wobei in diesem Fall die entsprechende Eingriffsvertiefung an der Schraubenanschlagsgegenfläche 77 des Oberteils 5 auszubilden ist.

Um die Solldeformationszone bereitzustellen, umfasst der Deformationspuffer 81 mehrere Einprägungen, die an einer Ringfläche 83 konvex vorstehen und mit der Schraubenanschlagsfläche 71 oder Schraubenanschlagsgegenfläche 77 in Eingriff kommen. Beim Verpressen des Deformationspuffers werden die Vorwölbungen 87 plastisch vorbestimmt deformiert, um das Erzeugung von Klemmkräften zwischen dem Oberteil 5 und dem Ventilgehäuse 54 in Bezug auf den Drehweg zu verzögern.

Die Wölbungen 87 sind auf der Ringflächenseite 89 der Basisringstruktur 81 konkav, während sie an der gegenüber liegenden Ringfläche 83 konvex sind. Somit unterscheiden sich die Eingriffsnasen 85 von den Wölbungen 87 dadurch, dass sich die axiale Stärke der Eingriffsnase größer als die der Wölbung 87 darstellt, wobei die Wölbung 87 eine Materialstärke aufweist, die der der Ringstruktur der Basisringstruktur 81 entspricht, und dass die Eingriffsnasen 85 bezüglich der Wölbungen 87 auf der gegenüberliegenden Seite der Basisringstruktur 81 hervorstehen.

Vorzugsweise sind mehr als vier derartige separate Solldeformationszonen in Form von Wölbungen 87 bei gleichen Umfangswinkelabständen (etwa 60°) an dem Deformationspuffer 81 ausgebildet.

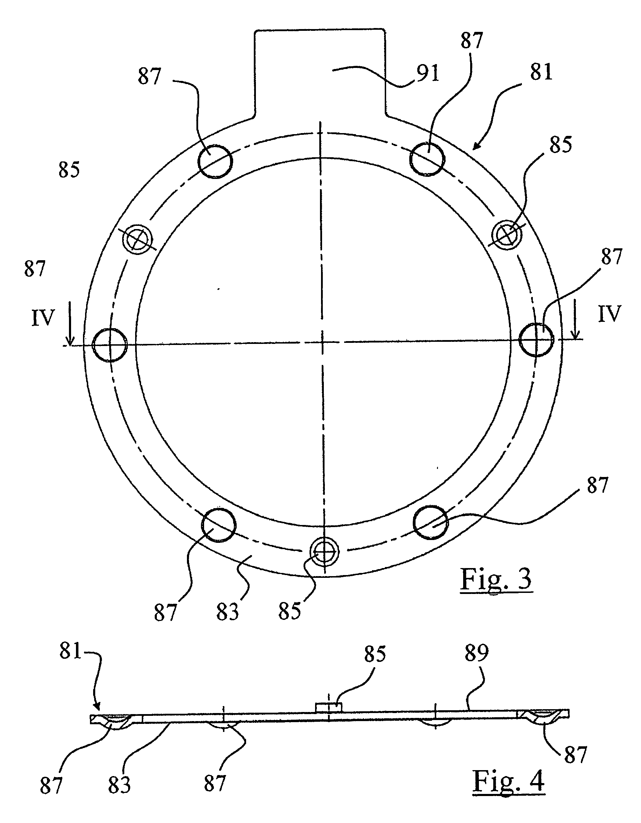

Der ringförmige Deformationspuffer 81 hat eine Endmontagelasche 91, welche je nach Orientierung der Eingriffsnasen und/oder der Wölbungen 87 der Solldeformationszone hin zu dem Oberteil 5 oder hin zu dem Ventilgehäuse 54 gebogen wird. Die Biegerichtung hängt davon ab, in welche Richtung die Eingriffsnasen 85 gerichtet sind. In Figur 4 sind die Eingriffsnasen 85 hin zu dem Ventilgehäuse 54 gerichtet, so dass die Endmontagelasche 91 vertikal nach oben hin zum Oberteil 5 umgebogen ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Stellgerät
- 3: Stellventil
- 5: Oberteil
- 7: Stellantrieb
- 11, 13: pneumatische Arbeitskammern
- 15: Membran
- 17: Kopplungsring
- 23a, 23b: Antriebsgehäusehälften
- 25a, 25b: pneumatische Anschlüsse
- 31: stellantriebsseitiges Antriebsstangenteil
- 33: ventilseitiges Abtriebsstangenteil
- 35: Stangenkoppler
- 37: Zulauf
- 41: Ablauf
- 43: Ventilsitzdurchgang
- 45: Ventilsitzring
- 47: Ventilglied
- 51: Jochstruktur
- 53: Stangen- oder Wellenführungseinsatz
- 54: Ventilgehäuse
- 55: Durchführöffnung
- 57: Hals
- 61: Leckagekanal
- 63: O-Ringe
- 65: Durchgang
- 71: Schraubenanschlagsfläche
- 73: Eingriffsvertiefungen
- 75: Montageradialabsatz
- 77: Schraubenanschlagsgegenfläche
- 81: Basisringstruktur/Deformationspuffer
- 83: Ringfläche
- 85: Eingriffsnase
- 87: Vorwölbungen
- 89: Ringflächenseite
- 91: Endmontagelasche
- A: Axialrichtung

## Patentansprüche

1. Stellgerät (1) für eine verfahrenstechnische Anlage, wie eine petrochemische Anlage, eine Brauerei, eine Nuklearanlage oder dergleichen, umfassend ein Stellventil (3) mit einem Ventilgehäuse (54), einem Ventilsitz und einem Ventilglied (47), das über eine Durchführöffnung (55) in dem Ventilgehäuse (54) betätigbar ist, und ein Oberteil (5), wie ein Joch, eine Laterne oder eine Antriebsstangen- oder Antriebswellenführung, zum Verschrauben an der Durchführöffnung (55) und zum starren Koppeln des Ventilgehäuses (54) an einen Stellantrieb, **dadurch gekennzeichnet, dass** an sich gegenüberliegenden Schraubanschlagsflächen (71) des Oberteils (5) und des Ventilgehäuses (54) ein Deformationspuffer (81) angeordnet oder ausgebildet ist, der beim Verschrauben des Oberteils (5) auf vorbestimmte Weise deformierbar ist, wobei der Deformationspuffer (81) wenigstens eine Eingriffsnase (85) aufweist, die in einer Eingriffsvertiefung (73) in einer Schraubanschlagsflächen (71) des Oberteils (5) oder des Ventilgehäuses (54) eingreift.

2. Stellgerät (1) für eine verfahrenstechnische Anlage, wie eine petrochemische Anlage, eine Brauerei, eine Nuklearanlage oder dergleichen, insbesondere nach Anspruch 1, umfassend ein Stellventil (3) mit einem Ventilgehäuse (54), einem Ventilsitz und einem Ventilglied (47), das über eine Durchführöffnung (55) in dem Ventilgehäuse (54) betätigbar ist, und ein Oberteil (5), wie ein Joch, eine Laterne oder eine Antriebsstangen- oder Antriebswellenführung, zum Verschrauben an der Durchführöffnung (55) und zum starren Koppeln des Ventilgehäuses (54) an einen Stellantrieb, **dadurch gekennzeichnet, dass** an sich gegenüberliegenden Schraubanschlagsflächen (71) des Oberteils (5) und des Ventilgehäuses (54) ein Deformationspuffer (81) angeordnet oder ausgebildet ist, der beim Verschrauben des Oberteils (5) auf vorbestimmte Weise deformierbar ist, wobei der Deformationspuffer (81) eine Sicherungslasche aufweist, die zum Abschluss der Verschraubung des Oberteils (5) hin zum Oberteil (5) oder zum Ventilgehäuse (54) umgebogen wird.

3. Stellgerät (1) nach Anspruch 1 oder 2, **dadurch gekennzeichnet, dass** der Deformationspuffer (81) mit dem Oberteil (5) oder dem Ventilgehäuse (54) derart gekoppelt ist, dass beim Verschrauben des Oberteils (5) der Deformationspuffer (81) gegenüber dem Oberteil (5) oder dem Ventilgehäuse (54) ortsfest gehalten wird.

4. Stellgerät (1) nach einem der vorstehenden Ansprüche, **dadurch gekennzeichnet, dass** der Deformationspuffer (81) eine scheibenförmige insbesondere geschlossene Basisringstruktur aufweist, insbesondere deren dem Oberteil (5) und dem Ventilgehäuse (54) zugewandten ringförmigen Klemmseiten abschnittweise eben geformt sind.

5. Stellgerät (1) nach einem der vorstehenden Ansprüche, dadurch **gekennzeichn e t ,** dass der Deformationspuffer (81) wenigstens eine von einer oder beiden - Klemmseiten der Basisringstruktur vorstehende Eingriffsnase (85) aufweist, die in einer insbesondere formkomplementären Eingriffsvertiefung (73) in einer Schraubanschlagsflächen (71) des Oberteils (5) oder des Ventilgehäuses (54) vorzugsweise lose eingreift, wobei insbesondere die wenigstens eine Eingriffsnase (85) als Vollkörper oder Durchzug ausgebildet ist und/oder die Eingriffsvertiefung (73) als Sackloch ausgebildet ist.

6. Stellgerät (1) nach einem der vorstehenden Ansprüche, **dadurch gekennzeichnet, dass** mehrere Eingriffsnasen (85) vorzugsweise mit einem konstanten Umfangsabstand von 120°, 90° oder 60° an der Basisringstruktur (81) ausgebildet sind, wobei insbesondere bei gleicher oder größerer Anzahl von Eingriffsvertiefungen (73) sämtliche Eingriffsnase (85) darin aufgenommen sind.

7. Stellgerät (1) nach einem der vorstehenden Ansprüche, dadurch **gekennzeichn e t,** dass der Deformationspuffer (81) auf einer dem Oberteil (5) und/oder dem Ventilgehäuse (54) zugewandten Klemmseite wenigstens eine Solldeformationszone aufweist, die beim Verschrauben allmählich deformierbar ist.

8. Stellgerät (1) nach Anspruch 7, **dadurch gekennzeichnet, dass** die wenigstens eine Solldeformationszone durch wenigstens eine Wölbung einer insbesondere scheibenförmigen Basisringstruktur (81) realisiert ist.

9. Stellgerät (1) nach Anspruch 7 oder 8, **dadurch gekennzeichnet, dass** mehrere Solldeformationszonen vorzugsweise mit einem konstanten Umfangsabstand von 120°, 90° oder 60° an der Basisringstruktur (81) ausgebildet sind.

10. Stellgerät (1) nach einem der vorstehenden Ansprüche 7 bis 9, **dadurch gekennzeichnet, dass** die wenigstens eine Eingriffsnase (85) der Verdrehsicherung vorzugsweise dem Ventilgehäuse (54) zugewandt ist und die wenigstens eine Solldeformationszone entgegengesetzt zur Eingriffsnase von der ebenen Klemmseite der Basisringstruktur (81) vorsteht.

## Claims

1. A positioning device (1) for a process plant, such as a petrochemical plant, a brewery, a nuclear plant or the like, comprising a valve, in particular a control valve (3), with a valve housing (54), a valve seat and a valve member (47), which can be actuated by means of a lead-through opening (55) in the valve housing (54), and a top (5), such as a yoke, a bonnet or a drive-rod guide or drive-shaft guide, for screwing on the lead-through opening (55) and for rigidly coupling the valve housing (54) onto an actuator, **characterized in that** a deformation buffer (81) is arranged or formed on mutually opposite screw stop surfaces (71) of the top (5) and the valve housing (54), which can be deformed in a predetermined manner when screwing the top (5), wherein the deformation buffer (81) has at least one engaging nose (85) which engages in an engagement depression (73) in a screw stop surface (71) of the top (5) or the valve housing (54).

2. A positioning device (1) for a process plant, such as a petrochemical plant, a brewery, a nuclear plant or the like, in particular according to claim 1, comprising a valve, in particular a control valve (3), with a valve housing (54), a valve seat and a valve member (47), which can be actuated by means of a lead-through opening (55) in the valve housing (54), and a top (5), such as a yoke, a bonnet or a drive-rod guide or drive-shaft guide, for screwing on the lead-through opening (55) and for rigidly coupling the valve housing (54) onto an actuator, **characterized in that** a deformation buffer (81) is arranged or formed on mutually opposite screw stop surfaces (71) of the top (5) and the valve housing (54), which can be deformed in a predetermined manner when screwing the top (5), wherein the deformation buffer (81) has a securing tab which is bent towards the top (5) or towards the valve housing (54) for terminating the screwing of the top (5).

3. The positioning device (1) according to Claim 1 or 2, **characterized in that** the deformation buffer (81) is coupled to the top (5) or to the valve housing (54) such that, when screwing the top (5), the deformation buffer (81) is held stationarily with respect to the top (5) or the valve housing (54).

4. The positioning device (1) according one of the preceding Claims, **characterized in that** the deformation buffer (81) has a disc-shaped, in particular closed base ring structure, wherein in particular the annular clamping sides of the deformation buffer (81), which face the top (5) and the valve housing (54), are in sections shaped in a planar manner.

5. The positioning device (1) according to one of the preceding claims, **characterized in that** the deformation buffer (81) has at least one engaging nose (85) protruding from one or both clamping sides of the base ring structure, which preferably loosely engages in an engagement depression (73), which is in particular shaped complementarily, in a screw stop surface (71) of the top (5) or the valve housing (54), wherein in particular the at least one engaging nose (85) is formed as a solid body or eyelet and/or the engagement depression (73) is formed as a blind hole.

6. The positioning device (1) according to one of the preceding Claims, **characterized in that** a plurality of engaging noses (85) are formed on the base ring structure (81), preferably with a constant circumferential spacing of 120°, 90° or 60°, wherein in particular in case of an equal or a larger number of engagement depressions (73), all engaging noses (85) are accommodated therein.

7. The positioning device (1) according to one of the preceding claims, **characterized in that** the deformation buffer (81) has at least one desired deformation zone on a clamping side facing the upper part (5) and/or facing the valve housing (54), which can be deformed gradually when screwing.

8. The positioning device (1) according to Claim 7, **characterized in that** the at least one desired deformation zone is realised by at least one bulge of an in particular disc-shaped base ring structure (81).

9. The positioning device (1) according to Claim 7 or 8, **characterized in that** a plurality of desired deformation zones are formed on the base ring structure (81), preferably with a constant circumferential spacing of 120°, 90° or 60°.

10. The positioning device (1) according to one of the preceding Claims 7 to 9, **characterized in that** the at least one engaging nose (85) of the rotational lock preferably faces the valve housing (54) and the at least one desired deformation zone protrudes oppositely to the engaging nose of the planar clamping side of the base ring structure (81).

## Revendications

1. Appareil de réglage (1) pour une installation technique de processus industriel, comme une installation pétrochimique, une brasserie, une installation nucléaire ou installation analogue, comprenant une vanne de régulation (3) avec un corps de vanne (54), un siège de vanne et un organe de vanne (47) qui peut être actionné dans le corps de vanne (54) par une ouverture de passage (55) et une partie supérieure (5), comme une culasse, une lanterne ou un guidage de barre de trasmission ou d'arbre de transmission, pour vissage à l'ouverture de passage (55) et pour couplage rigide du corps de vanne (54) à un servomoteur, **caractérisé en ce qu'**un amortisseur de déformation (81) est disposé ou constitué sur les surfaces de butée de vissage s'opposant (71) de la partie supérieure (5) et du corps de vanne (54), qui peut être déformé d'une manière prédéfinie lors du vissage de la partie supérieure (5), l'amortisseur de déformation (81) comportant au moins un ergot d'engagement (85), qui vient en prise dans une cavité d'engagement (73) dans une surface de butée de vissage (71) de la partie supérieure (5) ou du corps de vanne (54).

2. Appareil de réglage (1) pour une installation technique de processus industriel, comme une installation pétrochimique, une brasserie, une installation nucléaire ou installation analogue, en particulier selon la revendication 1, comprenant une vanne de régulation (3) avec un corps de vanne (54), un siège de vanne et un organe de vanne (47) qui peut être actionné dans le corps de vanne (54) par une ouverture de passage (55) et une partie supérieure (5) comme une culasse, une lanterne ou un guidage de barre de transmission ou d'arbre de transmission, pour vissage à l'ouverture de passage (55) et pour couplage rigide du corps de vanne (54) à un servomoteur, **caractérisé en ce qu'**un amortisseur de déformation (81) est disposé ou constitué sur les surfaces de butée de vissage s'opposant (71) de la partie supérieure (5) et du corps de vanne (54), qui peut être déformé d'une manière prédéfinie lors du vissage de la partie supérieure (5), l'amortisseur de déformation (81) comportant une languette de sécurité, qui est repliée vers la partie supérieure (5) ou vers le corps de vanne (54) pour verrouiller le vissage de la partie supérieure (5).

3. Appareil de réglage (1) selon la revendication 1 ou 2, **caractérisé en ce que** l'amortisseur de déformation (81) est couplé avec la partie supérieure (5) ou le corps de vanne (54) de telle manière que lors du vissage de la partie supérieure (5), **en ce que** l'amortisseur de déformation (81) est maintenu fixe contre la partie supérieure (5) ou le corps de vanne (54).

4. Appareil de réglage (1) selon l'une quelconque des revendications précédentes, **caractérisé en ce que** l'amortisseur de déformation (81) comporte une structure annulaire de base en forme de rondelle, en particulier fermée, en particulier dont les côtés de serrage de forme annulaire tournés vers la partie supérieure (5) et le corps de vanne (54) sont formés planes par section.

5. Appareil de réglage (1) selon l'une quelconque des revendications précédentes, **caractérisé en ce que** l'amortisseur de déformation (81) comporte au moins un ergot d'engagement (85) faisant saillie d'un ou des deux côtés de serrage de la structure annulaire de base, qui vient de préférence librement en prise dans une cavité d'engagement (73) en particulier par complémentarité de forme dans une surface de butée de vissage (71) de la partie supérieure (5) ou du corps de vanne (54), au moins un ergot d'engagement (85) étant constitué comme corps plein ou passage et/ou la cavité d'engagement (73) étant formée comme trou borgne.

6. Appareil de réglage (1) selon l'une quelconque des revendications précédentes, **caractérisé en ce que** plusieurs ergots d'engagement (85) sont formés sur la structure annulaire de base (81) de préférence avec une distance périmétrique constante de 120°, 90° ou 60°, tous les ergots d'engagement (85) étant logés dedans, en particulier pour un nombre égal ou supérieur de cavités d'engagement (73).

7. Appareil de réglage (1) selon l'une quelconque des revendications précédentes, **caractérisé en ce que** l'amortisseur de déformation (81) comporte au moins une zone de déformation théorique sur un côté de serrage tourné vers la partie supérieure (5) et/ou le corps de vanne (54), qui peut être progressivement déformée lors du vissage.

8. Appareil de réglage (1) selon la revendication 7, **caractérisé en ce qu'**au moins une zone de déformation théorique est réalisée par au moins une courbure d'une structure annulaire de base (81) en particulier en forme de rondelle.

9. Appareil de réglage (1) selon la revendication 7 ou 8, **caractérisé en ce que** plusieurs zones de déformation théoriques sont de préférence constituées sur la structure annulaire de base (81) avec une distance périmétrique constante de 120°, 90° ou 60°.

10. Appareil de réglage (1) selon l'une quelconque des revendications 7 à 9, **caractérisé en ce qu'**au moins un ergot d'engagement (85) est tourné vers la sécurité antitorsion, de préférence vers le corps de vanne (54) et au moins une zone de déformation théorique opposée à l'ergot d'engagement dépasse du côté de serrage plan de la structure annulaire de base (81).
